# EUROPEAN PATENT APPLICATION

(11) **EP 4 783 034 A1**
(43) Date of publication of application: **29.07.2026**
(21) Application number: 24878756.6
(22) Date of filing: 13.09.2024
(51) Int. Cl.: G06F 16/9537

(54) **DATA QUERY DEVICE AND METHOD**

(30) Priority: 20.10.2023 CN 202311375737
(71) Applicant: Yinwang Intelligent Technologies Co., Ltd., Shenzhen, Guangdong 518110 (CN)
(72) Inventor: YE, Jiesheng, Shenzhen, Guangdong 518129 (CN); LI, Jie, Shenzhen, Guangdong 518129 (CN)
(74) Representative: Gill Jennings & Every LLP
(86) International application number: PCT/CN2024/118822
(87) International publication number: WO 2025/082107

(57) **Abstract**

This application provides a data query apparatus and method. The data query apparatus includes: an intermediate agent module, configured to: obtain a first request, where the first request is used to request to obtain first data of a first vehicle in a first time period; and when the first data is not obtained from a database, send a second request to a data reload module, where the second request is used to request to reload original data of the first data; and a data reload module, configured to: obtain the original data from a data storage node based on the second request, reload second data corresponding to the original data to the database, and send indication information to the intermediate agent module, where the indication information indicates that data reloading is completed. The intermediate agent module is further configured to: obtain the second data from the database based on the indication information, and feed back the second data to a user. The data storage node can be connected with the database through the data query apparatus, so that the data query apparatus helps the user quickly and accurately query required data, thereby implementing efficient data query.

## Description

### CROSS-REFERENCE TO RELATED APPLICATIONS

This application claims priority to Chinese Patent Application No. 202311375737.7, filed with the China National Intellectual Property Administration on October 20, 2023 and entitled "DATA QUERY APPARATUS AND METHOD", which is incorporated herein by reference in its entirety.

### TECHNICAL FIELD

This application relates to the field of data query technologies, and in particular, to a data query apparatus and method.

### BACKGROUND

In a vehicle data query service in a vehicle cloud service, in consideration of costs, most users need to query only vehicle data (for example, controller area network (Controller Area Network, CAN) signal data) in the last month. Therefore, in a database, time to live (Time to Live, TTL) of the vehicle data is set to one month. However, when the user needs to query expired CAN signal data, corresponding original CAN signal data is queried through manual processing, then the original CAN signal data is parsed, and the parsed original CAN signal data is sent to a terminal device used by the user, so that the user views a text. However, this manual processing manner generally requires frequent communication and interaction confirmation (for example, data security confirmation and data feedback time confirmation), resulting in a long overall time consumed for querying the CAN signal data.

To resolve the foregoing problem, some solutions are proposed in the industry. However, in these solutions, the TTL of the CAN signal data needs to be greatly increased. As a result, database storage costs are significantly increased, and data query efficiency is slowed down because a large amount of unnecessary data may be stored. Alternatively, a manually extracted delivery part needs to be extracted into an offline applet, and the user automatically triggers execution of the offline applet. However, the offline applet needs to query the CAN signal data required by the user in a large amount of scattered CAN signal data, resulting in low data query efficiency. Therefore, currently, a solution for querying the vehicle CAN signal data needs to be further studied.

### SUMMARY

This application provides a data query apparatus and method, to implement efficient data query.

According to a first aspect, this application provides a data query apparatus. The data query apparatus is configured to provide a data query service for a user (for example, automotive enterprise personnel). Optionally, the data query apparatus may include an intermediate agent module and a data reload module. The intermediate agent module, configured to obtain a first request, where the first request is used to request to obtain first data of a first vehicle in a first time period, and when the intermediate agent module does not obtain the first data from a database, the intermediate agent module may send a second request to the data reload module, where the second request is used to request to reload original data of the first data. The data reload module is configured to: obtain the original data from a data storage node based on the second request, reload second data corresponding to the original data to the database, and then send indication information to the intermediate agent module, where the indication information indicates that data reloading is completed. The intermediate agent module is further configured to: obtain the second data from the database based on the indication information, and feed back the second data to the user.

In the data query apparatus, when the intermediate agent module does not obtain the first data from the database, the data reload module may be used to connect the data storage node with the database, so that data is automatically reloaded from the data storage node to the database, and the intermediate agent module can re-obtain data that needs to be queried. In this way, the data query apparatus can help the user (for example, automotive enterprise personnel) quickly and accurately query required data. Certainly, the user may also query all historical data by using the data query apparatus, enabling efficient and comprehensive data queries.

In a possible design, the second request may include a vehicle identifier of the first vehicle and the first time period. When obtaining the original data from the data storage node based on the second request, the data reload module is specifically configured to: determine, based on the vehicle identifier of the first vehicle and the first time period, a storage path corresponding to the original data; and obtain the original data from the data storage node based on the storage path.

In the foregoing design, the data reload module can quickly and accurately determine, based on the vehicle identifier of the first vehicle and the first time period, a location of the original data used to store the first data, so that the original data can be effectively queried in a timely manner.

In a possible design, when determining, based on the vehicle identifier of the first vehicle and the first time period, the storage path corresponding to the original data, the data reload module is specifically configured to: determine a first time to which the first time period belongs, where the first time includes a date to which the first time period belongs and a full hour to which the first time period belongs; and generate the storage path based on the vehicle identifier of the first vehicle and the first time.

In the foregoing design, when the storage path that is in the data storage node and that is used to store the original data includes the vehicle identifier, the date, and the full hour, if the data reload module needs to query the data storage node for the original data of the first vehicle in the first time period, the storage path needs to be generated based on the vehicle identifier of the first vehicle, the date to which the first time period belongs, and the full hour to which the first time period belongs, and then corresponding original data may be accurately obtained from the data storage node in a timely manner based on the storage path.

In a possible design, the data reload module may include a data reading module, a data parsing module, and a data import module. The data reading module is configured to: obtain the original data from the data storage node, and store the original data into a first reload queue. The data parsing module is configured to: obtain the original data from the first reload queue, parse the original data to obtain the second data, and store the second data into a second reload queue. The data import module is configured to: obtain the second data from the second reload queue, and store the second data into the database.

In the foregoing design, through collaborative work of the data reading module, the data parsing module, and the data import module, and by using the first reload queue and the second reload queue, a data reload channel may be established, and the data storage node and the database are connected. In this way, the original data can be automatically written from the data storage node into the database.

In a possible design, the data parsing module is further configured to: when the first write queue stores original data of the first vehicle at a first collection time, obtain the original data of the first vehicle at the first collection time from the first write queue, parse the original data of the first vehicle at the first collection time, to obtain first data of the first vehicle at the first collection time, and may store the first data of the first vehicle at the first collection time into a second write queue. Optionally, the first collection time is included in the first time period. The data import module is further configured to: obtain the first data of the first vehicle at the first collection time from the second write queue, and if the first collection time is in a preset data storage time range, store the first data of the first vehicle at the first collection time into the database; and/or if a data type to which the first data of the first vehicle at the first collection time belongs is in a preset data type table, store the first data of the first vehicle at the first collection time into the database.

For example, the data import module may provide a high-frequency parameter configuration interface for the user. The high-frequency parameter configuration interface displays some high-frequency parameter information that needs to be edited by the user, so that the user configures, on the high-frequency parameter configuration interface, a time range (namely, a data storage time range) of data that needs to be written into the database and a type of data that needs to be written into the database (for example, signal data that can be stored into the database).

In the foregoing design, by using a data parsing function of the data parsing module and a data writing function of the data import module, the data collected by the vehicle can be effectively written into the database in a timely manner. In this way, the user can quickly query corresponding data based on the vehicle identifier and the query time period. In addition, the data import module writes the data into the database only when determining that the data is high-frequency data. This can reduce storage pressure and storage costs of the database.

In a possible design, the data query apparatus may further include a data storage module. The data storage module is configured to: obtain the original data of the first vehicle at the first collection time from the first write queue, and determine, in the data storage node based on the vehicle identifier of the first vehicle and a second time to which the first collection time, a storage path corresponding to the original data of the first vehicle at the first collection time, where the second time includes a date to which the first collection time belongs and a full hour to which the first collection time belongs. Then, the data storage module determines, in a storage directory corresponding to the storage path and based on the vehicle identifier of the first vehicle and the first collection time, a file used to store the original data of the first vehicle at the first collection time, and then the data storage module stores the vehicle identifier of the first vehicle, a receiving time of the original data of the first vehicle at the first collection time, the first collection time, and the original data of the first vehicle at the first collection time into the file in a manner of columnar storage (or may be referred to as a manner of uniform columnar storage).

In the foregoing design, the data storage module stores the original data in a manner of columnar storage, so that subsequent data reloading and data query can be efficiently performed.

In a possible design, the data query apparatus may further include a data query front-end module. The data query front-end module is configured to: provide a data query interface. The data query front-end module may obtain, from the data query interface, a data query requirement entered by a user. Then, the data query front-end module may generate the first request based on the data query requirement, and may send the first request to the intermediate agent module, where the data query interface is used to prompt the user to enter the data query requirement. The data query requirement may include a data query parameter, and the data query parameter may include one or more of a vehicle identifier, whether to reload data, or a query time period.

In the foregoing design, the data query front-end module provides the data query interface for the user, so that human-computer interaction can be implemented, a query operation of the user is more intuitive and convenient, and visual editing of the data query request is implemented. In this way, the user can effectively query data in a timely manner based on an actual requirement, and data can be displayed in a visualized manner.

In a possible design, a time period between any full hour in a day and a nearest full hour after the full hour may be divided into a plurality of specified time periods, and the vehicle identifier of the first vehicle may separately form a plurality of different file identifiers with the plurality of specified time periods; and a file corresponding to a first file identifier in the plurality of different file identifiers is used to store original data that is of the first vehicle and whose collection time is in a specified time period corresponding to the first file identifier.

In the foregoing design, when the original data is stored into the data storage node, a time period between two adjacent full hours is split into a plurality of specified time periods, so that the original data collected by the vehicle is kept writing, based on a specified time period (for example, 15 minutes), into a file corresponding to the specified time period. After the specified time period expires, a next new file is switched to write original data subsequently collected by the vehicle. In this way, efficiency of reading and writing file data can be improved, and a required data file can be quickly located based on a file identifier.

In a possible design, data included in the database may be associated with a configuration of the user. For example, the configuration of the user may include at least one of the following: the preset data storage time range, the preset data type table, time to live of the data in the database, or whether consecutive same data is compressed for storage.

In the foregoing design, data written into the database as the high-frequency data is flexibly configured based on an actual requirement of the user, and time to live or another attribute of the data in the database may be flexibly configured, so that storage costs of the database can be reduced while different requirements of the user are met.

According to a second aspect, this application provides a data query method. The method may be performed by a data query apparatus or a component (for example, a chip, a chip system, or a circuit) that can support the data query apparatus in implementing a function required in the method. For beneficial effects, refer to related descriptions in the first aspect. Details are not described herein again. For example, the data query apparatus may include an intermediate agent module and a data reload module. Optionally, an example in which the data query method is implemented by exchanging data between the intermediate agent module and the data reload module that are included in the data query apparatus is used for description. In the method, the intermediate agent module obtains a first request, where the first request is used to request to obtain first data of a first vehicle in a first time period, when the first data is not obtained from a database, the intermediate agent module may send a second request to the data reload module, where the second request is used to request to reload original data of the first data. Then, the data reload module may obtain the original data from a data storage node based on the second request. In addition, second data corresponding to the original data may be reloaded to the database. Then, the data reload module may send indication information to the intermediate agent module, where the indication information indicates that data reloading is completed. Finally, the intermediate agent module may obtain the second data from the database based on the indication information, and the second data may be fed back to a user.

In a possible design, the second request includes a vehicle identifier of the first vehicle and a first time period. That the data reload module obtains the original data from the data storage node based on the second request includes: The data reload module may determine, based on the vehicle identifier of the first vehicle and the first time period, a storage path corresponding to the original data. Then, the data reload module may obtain the original data from the data storage node based on the storage path.

In a possible design, that the data reload module determines, based on the vehicle identifier of the first vehicle and the first time period, the storage path corresponding to the original data includes: The data reload module may first determine a first time to which the first time period belongs, where the first time includes a date to which the first time period belongs and a full hour to which the first time period belongs. Then, the data reload module may generate the storage path based on the vehicle identifier of the first vehicle and the first time.

In a possible design, the data reload module includes a data reading module, a data parsing module, and a data import module. The method further includes: The data reading module may obtain the original data from the data storage node, and may store the original data into a first reload queue. Then, the data parsing module may obtain the original data from the first reload queue, parse the original data to obtain the second data, and store the second data into a second reload queue. The data import module may obtain the second data from the second reload queue, and may store the second data into the database.

In a possible design, the method further includes: When the first write queue stores the original data of the first vehicle at the first collection time, the data parsing module may obtain the original data of the first vehicle at the first collection time from the first write queue, and may parse the original data of the first vehicle at the first collection time, to obtain the first data of the first vehicle at the first collection time. Then, the data parsing module may store the first data of the first vehicle at the first collection time into the second write queue. For example, the first collection time may be included in the first time period. Then, the data import module may obtain the first data of the first vehicle at the first collection time from the second write queue, if the first collection time is in the preset data storage time range, the data import module may store the first data of the first vehicle at the first collection time into the database, and/or if a data type to which the first data of the first vehicle at the first collection time belongs is in the preset data type table, the data import module may store the first data of the first vehicle at the first collection time into the database.

In a possible design, the data query apparatus further includes a data storage module. The method further includes: The data storage module may obtain the original data of the first vehicle at the first collection time from the first write queue, and may determine, in the data storage node based on the vehicle identifier of the first vehicle and a second time to which the first collection time belongs, a storage path corresponding to the original data of the first vehicle at the first collection time, where the second time includes a date to which the first collection time belongs and a full hour to which the first collection time belongs. Then, the data storage module may determine, in a storage directory corresponding to the storage path and based on the vehicle identifier of the first vehicle and the first collection time, a file used to store the original data of the first vehicle at the first collection time, and the data storage module may store the vehicle identifier of the first vehicle, a receiving time of the original data of the first vehicle at the first collection time, the first collection time, and the original data of the first vehicle at the first collection time into the file in a manner of columnar storage.

In a possible design, the data query apparatus further includes a data query front-end module. The method further includes: The data query front-end module provides a data query interface, where the data query interface is used to prompt the user to enter a data query requirement, the data query requirement may include a data query parameter, and the data query parameter may include one or more of a vehicle identifier, whether to reload data, or a query time period. The data query front-end module may obtain a data query requirement from the data query interface, and may generate the first request based on the data query requirement. Then, the data query front-end module may send the first request to the intermediate agent module.

In a possible design, a time period between any full hour in a day and a nearest full hour after the full hour may be divided into a plurality of specified time periods, and the vehicle identifier of the first vehicle may separately form a plurality of different file identifiers with the plurality of specified time periods; and a file corresponding to a first file identifier in the plurality of different file identifiers is used to store original data that is of the first vehicle and whose collection time is in a specified time period corresponding to the first file identifier.

In a possible design, data included in the database may be associated with a configuration of the user. For example, the configuration of the user may include at least one of the following: the preset data storage time range, the preset data type table, time to live of the data in the database, or whether consecutive same data is compressed for storage.

For beneficial effects of the method in any possible design of the second aspect, refer to corresponding descriptions of the first aspect. Details are not described herein again.

According to a third aspect, this application provides a data query method. The method may be performed by an intermediate agent module or a component (for example, a chip, a chip system, or a circuit) that can support the intermediate agent module in implementing a function required in the method. For beneficial effects, refer to related descriptions in the first aspect. Details are not described herein again. Optionally, an example in which the intermediate agent module performs the data query method is used for description. In the method, the intermediate agent module obtains a first request, where the first request is used to request to obtain first data of a first vehicle in a first time period. When the first data is not obtained from a database, the intermediate agent module may send a second request to a data reload module, where the second request is used to request to reload original data of the first data. Then, the intermediate agent module receives indication information from the data reload module, where the indication information indicates that data reloading is completed. Then, the intermediate agent module may obtain second data from the database based on the indication information, and the second data may be fed back to a user.

According to a fourth aspect, this application provides a data query method. The method may be performed by a data reload module or a component (for example, a chip, a chip system, or a circuit) that can support the data reload module in implementing a function required in the method. For beneficial effects, refer to related descriptions in the first aspect. Details are not described herein again. Optionally, an example in which the data reload module performs the data query method is used for description. In the method, the data reload module receives a second request from an intermediate agent module, where the second request is used to request to reload original data of first data of a first vehicle in a first time period, the second request is generated by the intermediate agent module when the intermediate agent module does not obtain the first data from a database. Then, the data reload module may obtain the original data from a data storage node based on the second request, and may reload second data corresponding to the original data to the database. The data reload module may send indication information to the intermediate agent module, where the indication information indicates that data reloading is completed.

According to a fifth aspect, this application provides a data query apparatus. The data query apparatus includes a communication interface and a processor. Optionally, the data query apparatus further includes a memory. The memory is configured to store a computer program or instructions. The processor is coupled to the memory and the communication interface. When the processor executes the computer program or the instructions, the data query apparatus is enabled to perform the method according to any one of the possible designs of the second aspect, or implement the method according to the second aspect, or implement the method according to the third aspect. In an example, the communication interface may be a transceiver apparatus integrated with a data sending/receiving function. In another example, the communication interface may alternatively include a transmitter and a receiver. The transmitter is configured to send data, and the receiver is configured to receive data.

According to a sixth aspect, this application provides a vehicle data query system. The vehicle data query system may include a database, a data storage node, and a data query apparatus. The data query apparatus is configured to implement the method in any possible design of the second aspect, or implement the method according to the second aspect, or implement the method according to the third aspect. The database is configured to store parsed data of one or more vehicles. The data storage node is configured to back up and store original data of one or more vehicles.

According to a seventh aspect, this application provides a computer program product. The computer program product includes a computer program or an instruction. When the computer program or the instruction runs on a computer, the computer is enabled to perform the method in any possible design of the second aspect, or implement the method according to the second aspect, or implement the method according to the third aspect.

According to an eighth aspect, this application provides a computer-readable storage medium. The computer-readable storage medium stores a computer program or instructions. When the computer program or the instructions are executed by a computer, the computer is enabled to perform the method in any possible design of the second aspect, or implement the method according to the second aspect, or implement the method according to the third aspect.

According to a ninth aspect, this application further provides a chip, including a processor. The processor is coupled to a memory, and is configured to execute a computer program or instructions stored into the memory. When the computer program or the instructions are executed, the method in any possible design of the second aspect is implemented, or the method according to the second aspect is implemented, or the method according to the third aspect is implemented.

According to a tenth aspect, this application further provides a chip system. The chip system includes a processor, configured to support a computer apparatus in implementing the method in any possible design of the second aspect, or implementing the method according to the second aspect, or implementing the method according to the third aspect. In a possible design, the chip system further includes a memory, and the memory is configured to store a program and data that are necessary for the computer apparatus. The chip system may include a chip, or may include a chip and another discrete component.

In this application, the implementations provided in the foregoing aspects may be further combined to provide more implementations.

### BRIEF DESCRIPTION OF DRAWINGS

FIG. 1 is a diagram of an example of a possible application scenario according to an embodiment of this application;
FIG. 2a is a diagram of an example of a structure of a data query apparatus according to an embodiment of this application;
FIG. 2b is a diagram of an example of a structure of a data reload module according to an embodiment of this application;
FIG. 2c is a diagram of an example of another possible structure of a data query apparatus according to an embodiment of this application;
FIG. 2d is a diagram of an example of still another structure of a data query apparatus according to an embodiment of this application;
FIG. 3 is a schematic flowchart of an example of a data query method according to an embodiment of this application;
FIG. 4a is a diagram of an example of a data query interface according to an embodiment of this application;
FIG. 4b is a diagram of an example of another data query interface according to an embodiment of this application;
FIG. 5 is a schematic flowchart of an example of reloading data by a data reload module according to an embodiment of this application;
FIG. 6A and FIG. 6B are a schematic flowchart of an example of storing, by a data query apparatus, data collected by a vehicle according to an embodiment of this application; and
FIG. 7 is a diagram of an example of still another structure of a data query apparatus according to an embodiment of this application.

### DESCRIPTION OF EMBODIMENTS

Before technical solutions provided in this application are described, some terms in this application are first explained and described, to facilitate understanding by a person skilled in the art.

Data reload (Data Reload): Original data stored on a data storage node (like a hard disk) is stored into a database after being obtained, loaded, parsed, and imported to the database.

The following describes in detail embodiments of this application with reference to the accompanying drawings.

The following describes an application scenario to which a data query apparatus provided in this application is applicable. It should be noted that these descriptions are for ease of understanding by a person skilled in the art, and are not intended to limit the protection scope claimed by this application.

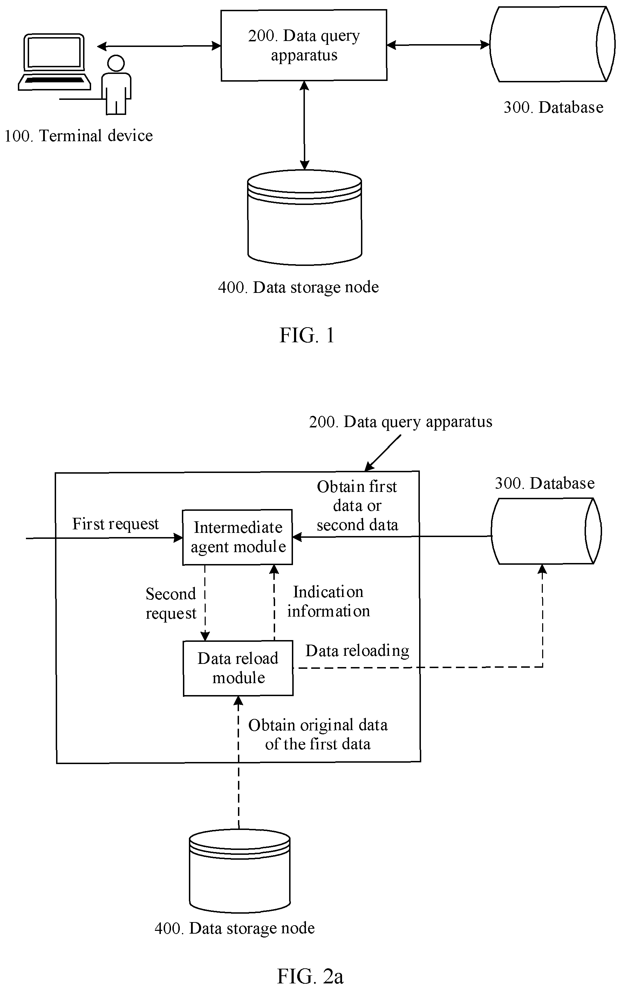

FIG. 1 is a diagram of an example of a possible application scenario to which an embodiment of this application is applicable. As shown in FIG. 1, the application scenario may include a terminal device 100, a data query apparatus 200, a database 300, and a data storage node 400. Optionally, the terminal device 100 may be communicatively connected to the data query apparatus 200 through one or more networks. The data query apparatus 200 may be communicatively connected to the database 300 through one or more networks. The data query apparatus 200 may be communicatively connected to the data storage node 400 through one or more networks. The network may be a wired network, or may be a wireless network. For example, the wireless network may be a wireless-fidelity (Wireless-Fidelity, Wi-Fi) network, or may be a mobile cellular network, or may be a network in another form. This is not limited in this embodiment of this application.

A target application used to assist a user (for example, automotive enterprise personnel) in querying vehicle data (for example, CAN signal data, local interconnect network (Local Interconnect Network, LIN) signal data, or Ethernet (EtherNet, ETH) signal data) is installed on the terminal device 100. For example, the user is automotive enterprise personnel, and the automotive enterprise personnel may edit and submit related query information of a to-be-queried vehicle (for example, a query time of the to-be-queried vehicle (including a query date and a query time period), a vehicle name, a vehicle identifier (or may be referred to as a vehicle index), or whether to reload data) to the data query apparatus 200 through the target application. For example, the target application may be a client, a web page application, or an applet embedded in another application. In this way, the user can conveniently query data (for example, CAN signal data) anytime and anywhere. Optionally, the terminal device 100 may include a display, configured to present a data query interface provided by the data query apparatus 200, to implement human-computer interaction. Information edited by the user, information provided for the user, or the like is displayed on the data query interface.

For example, the terminal device 100 may be a smartphone, a tablet computer, a desktop computer, a computer (for example, a notebook computer) with a wireless transceiver function, a palmtop computer (Personal Digital Assistant, PPD), a mobile internet device (mobile internet device, MID), a vehicle-mounted terminal, a wearable device (for example, a smart watch, a smart band, smart glasses, or a smart helmet) with a wireless communication function, a virtual reality (virtual reality, VR) device, an augmented reality (augmented reality, AR) device, a smart home device (for example, a smart speaker or a smart TV), or the like. It should be understood that a specific device form of the terminal device is not limited in this application.

The data query apparatus 200 is a device (for example, a server or a computing device) configured to provide a data query service for a user. For example, the data query apparatus 200 provides corresponding data (for example, CAN signal data of a vehicle) for the user in response to a related data query operation performed by the user on a target application on the terminal device 100. For example, the data query apparatus 200 may be a vehicle data query system (for example, a vehicle history record (Vehicle history record, VHR) cloud service-signal data query system), or may be a computing device (for example, a computer) having a data query function, or any other device, or may be a functional element (for example, a chip or a circuit having a data query function) disposed in a computing device or any other device. The data query function system may be an independent physical server, or may be a server cluster or a distributed system including a plurality of physical servers, or may be a cloud server configured to provide cloud computing services such as a cloud service, cloud computing, cloud storage, cloud communication, a network service, a security service, and big data.

The database 300 is configured to store parsed data (for example, CAN signal data, LIN signal data, or ETH signal data) of one or more vehicles. For example, a vehicle is a vehicle A. The database 300 may be configured to store high-frequency data of the vehicle A (for example, CAN signal data of the vehicle A in a latest month).

The data storage node 400 is configured to back up and store original data of one or more vehicles. For example, the data storage node may be a backup hard disk (for example, a network attached storage (Network Attached Storage, NAS) hard disk or a disk array (Redundant Array of Independent Disk, RAID) hard disk) or another persistent storage device.

For example, the terminal device 100 is a desktop computer, and the target application is a web browser that is installed on the desktop computer and that is used to assist automotive enterprise personnel in querying vehicle data (for example, CAN signal data). When automotive enterprise personnel (for example, automotive enterprise personnel A) needs to query CAN signal data (such as a vehicle light, a mileage, a vehicle speed, a rotational speed, an oil pressure, a voltage, a motor temperature, a battery temperature, a battery level, a corner, an acceleration, and a fault code) of a vehicle (for example, a vehicle A) at a query time (for example, 9:00-9:20 on a date YYYY-MM-DD), the automotive enterprise personnel A may log in, by using a web browser installed on a used desktop computer, to a data query interface provided by the data query apparatus 200, and may edit query information of the vehicle A on the data query interface, for example, the query time (a date: YYYY-MM-DD and a query time period: 9:00-9:20) and a vehicle identifier A. Then, the automotive enterprise personnel A may submit the query information of the vehicle A after editing the query information of the vehicle A. In response to a submission operation performed by the automotive enterprise personnel A on the query information of the vehicle A on the web browser, the data query apparatus 200 may obtain the query information of the vehicle A, and may perform a data query procedure for the vehicle A.

Optionally, the data query apparatus provided in this embodiment of this application may be applied to a plurality of fields (for example, vehicle maintenance, vehicle detection, vehicle evaluation, and vehicle teaching).

It should be noted that FIG. 1 provides only an example of a possible application scenario. The example of the application scenario is intended to describe the technical solutions in embodiments of this application more clearly, and does not constitute a limitation on an application scenario of the data query apparatus provided in this application. In addition, forms and quantities of devices in the application scenario shown in FIG. 1 are merely used as examples, and do not constitute a limitation on this application. In addition, names of the devices in the application scenario shown in FIG. 1 are merely examples. In specific implementation, the names of the devices may alternatively be other names. This is not specifically limited in this application. In addition, a person of ordinary skill in the art may learn that, as a new application scenario emerges, the technical solutions provided in embodiments of this application are also applicable to a similar technical problem.

Based on the application scenario shown in FIG. 1, this application further provides structures of functional modules of a data query apparatus. As shown in FIG. 2a, division is performed based on logical functions. The data query apparatus may be divided into the following functional modules: an intermediate agent module, a data reload module, and the like. Optionally, the data reload module may include but is not limited to at least one of the following: a data reading module, a data parsing module, or a data import module.

It should be noted that a connection relationship between the functional modules shown in FIG. 2a is merely an example, and does not constitute a limitation on this application. The following describes a function of each functional module.

The intermediate agent module is configured to obtain a first request, where the first request is used to request to obtain first data of a first vehicle in a first time period. The intermediate agent module is further configured to: when the first data is not obtained from a database based on the first request, send a second request to the data reload module, where the second request is used to request to reload original data of the first data. Optionally, the intermediate agent module is further configured to: when obtaining the first data from the database based on the first request, feed back the first data to a user. For example, the intermediate agent module may be a data adapt center (Data-access) microservice.

The data reload module is configured to: obtain the original data of the first data from a data storage node based on the second request, reload second data corresponding to the original data to the database, and send indication information to the intermediate agent module, where the indication information indicates that data reloading is completed.

For example, the second request includes a vehicle identifier (or a vehicle name) of the first vehicle and the first time period. After obtaining the second request, the data reload module may determine, based on the vehicle identifier (or the vehicle name) of the first vehicle and the first time period that are included in the second request, a storage path corresponding to the original data. Then, the data reload module may obtain the original data from the data storage node based on the storage path.

The data reload module may obtain the original data from the data storage node in, but not limited to, the following implementations.

Manner 1: The data reload module may obtain the original data from the data storage node based on a storage directory corresponding to the storage path.

Manner 2: The data reload module may first determine a storage directory corresponding to the storage path in the data storage node. Then, the data reload module may obtain the original data from the storage directory.

Optionally, after obtaining the second request, the data reload module may first determine a first time to which the first time period belongs. Then, the data reload module may determine, based on the vehicle identifier (or the vehicle name) of the first vehicle and the first time, the storage path corresponding to the original data.

In a possible implementation, when the first time period is a time period that spans two full hours, there are two first times. In other words, one first time includes a date to which the first time period belongs and a previous full hour to which the first time period belongs, the other first time includes the date to which the first time period belongs and a latter full hour to which the first time period belongs.

In another possible implementation, when the first time period is a time period of a full hour (that is, the first time period does not span two full hours), and there is one first time, the first time includes a date to which the first time period belongs and a full hour to which the first time period belongs.

The data reload module may determine the storage path corresponding to the original data in, but not limited to, the following implementations.

Manner 1: The data reload module determines a hash value of the vehicle identifier (or the vehicle name) of the first vehicle, and may perform a modulo operation on the hash value and a preset threshold, to obtain a first value. Then, the data reload module may determine, based on the first value and the first time, the storage path corresponding to the original data. In this way, in Manner 1, it can be ensured that data (for example, CAN signal data) of a same vehicle can be stored into a same directory (namely, a directory formed by hash values of vehicle identifiers (or vehicle names)), and a location of the original data can be quickly located based on a query time period.

For example, the data reload module may concatenate the first value and the first time to obtain the storage path corresponding to the original data. For example, the preset threshold may be determined based on a total quantity of vehicles of a vehicle enterprise and a quantity of pieces of vehicle data that needs to be stored into each storage directory. For example, an automotive enterprise A is used as an example. The automotive enterprise A has 10,000 vehicles, and data of 100 vehicles needs to be stored into each storage directory. In this case, the preset threshold is 10000/100=100.

In an example, the vehicle identifier of the first vehicle is A, the first time period is 10:30-10:50 on a date YYYY-MM-DD, and the preset threshold is p. The data reload module may first determine a hash value of the vehicle identifier A, for example, the hash value is hash (A), and the data reload module may determine that the first time to which the first time period belongs is 10:00 on YYYY-MM-DD. Then, the data reload module may perform a modulo operation on the hash value hash (A) and the preset threshold p, to obtain the first value. For example, the first value is s. Then, the data reload module may concatenate the first value s and the first time 10:00 on YYYY-MM-DD, to obtain that the storage path corresponding to the original data is s/10:00 on YYYY-MM-DD. The storage path s/10:00 on YYYY-MM-DD indicates a subdirectory in a directory formed by the first value s.

In another example, the vehicle identifier of the first vehicle is A, the first time period is 10:50-11:10 on a date YYYY-MM-DD, and the preset threshold is p. The data reload module may first determine a hash value of the vehicle identifier A, for example, the hash value is hash (A), and the data reload module may determine that a first time to which the first time period belongs is 10:00 on YYYY-MM-DD, and another first time to which the first time period belongs is 11:00 on YYYY-MM-DD. Then, the data reload module may perform a modulo operation on the hash value hash (A) and the preset threshold p, to obtain the first value. For example, the first value is s. Then, the data reload module may concatenate the first value s and the first time 10:00 on YYYY-MM-DD, to obtain a storage path s/10:00 on YYYY-MM-DD corresponding to the original data, and concatenate the first value s and the first time 11:00 on YYYY-MM-DD, to obtain another storage path corresponding to the original data s/11:00 on YYYY-MM-DD. In this way, it can be learned that a part of original data included in the original data of the first data is stored into a storage directory corresponding to the storage path s/10:00 on YYYY-MM-DD, and another part of original data included in the original data of the first data is stored into a storage directory corresponding to the storage path s/11:00 on YYYY-MM-DD.

Manner 2: The data reload module may combine (or splice) the vehicle identifier (or the vehicle name) of the first vehicle and the first time, to obtain the storage path corresponding to the original data.

In an example, the vehicle identifier of the first vehicle is A, and the first time period is 10:30-10:50 on a date YYYY-MM-DD. The data reload module may first determine that the first time to which the first time period belongs is 10:00 on YYYY-MM-DD. Then, the data reload module may concatenate the vehicle identifier A and the first time 10:00 on YYYY-MM-DD, to obtain that a storage path corresponding to the original data is A/10:00 on YYYY-MM-DD.

In another example, the vehicle identifier of the first vehicle is A, and the first time period is 10:50-11:10 on a date YYYY-MM-DD. The data reload module may determine that a first time to which the first time period belongs is 10:00 on YYYY-MM-DD, and another first time to which the first time period belongs is 11:00 on YYYY-MM-DD. Then, the data reload module may concatenate the vehicle identifier A and the first time 10:00 on YYYY-MM-DD, to obtain a storage path A/10:00 on YYYY-MM-DD corresponding to the original data, and concatenate the vehicle identifier A and the first time 11:00 on YYYY-MM-DD, to obtain a storage path corresponding to the original data A/11:00 on YYYY-MM-DD. In this way, it can be learned that the original data of the first data is separately stored into storage directories corresponding to the two storage paths, and the complete original data of the first data needs to be obtained based on the storage directories corresponding to the two storage paths.

It should be understood that the foregoing content merely describes several possible manners of determining the storage path corresponding to the original data as examples. The data reload module may alternatively determine the storage path corresponding to the original data in another manner. This is not listed one by one in this embodiment of this application.

The intermediate agent module is further configured to: obtain the second data from the database based on the indication information, and feed back the second data to the user.

Optionally, after obtaining the indication information from the data reload module, the intermediate agent module may learn that the original data has been reloaded. Then, the intermediate agent module may re-query the database for related data of the first vehicle in the first time period, and may feed back the found second data to the user. Optionally, the second data may be understood as first data that the user requests to obtain.

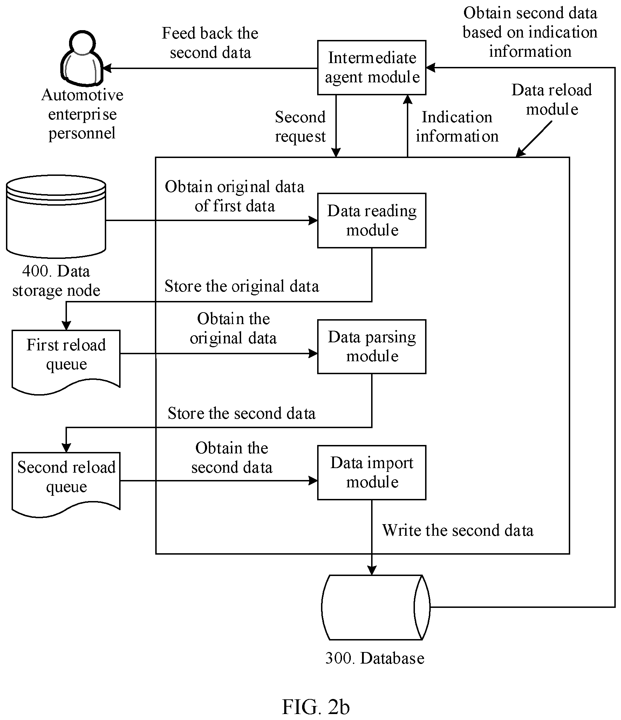

For example, the following describes, with reference to FIG. 2b by using an example in which the data reload module includes the data reading module, the data parsing module, and the data import module, a specific implementation process in which the data reload module reloads the second data corresponding to the original data to the database.

The data reading module is configured to implement a function of obtaining the original data from the data storage node by the data reload module. For example, the data reading module may be a data ETL (Extract-Transform-Load) microservice.

For example, after the data reading module obtains the second request, the data reading module may determine, based on the vehicle identifier (Identification, ID) of the first vehicle and the first time period that are included in the second request, a storage path corresponding to the original data, and may obtain the original data from the data storage node based on the storage path. Then, the data reading module may store the original data into a first reload queue. For example, the first reload queue is used to store original data (for example, original CAN signal data, original LIN signal data, or original ETH signal data) of one or more pieces of data in a data reload process.

The data parsing module is configured to implement a data parsing function of the data reload module. The data parsing module may provide a data parsing service. For example, the data parsing module may be a data parsing microservice.

For example, after the data parsing module subscribes to the first reload queue, the data parsing module may obtain the original data from the first reload queue, and may parse the original data to obtain the second data. Then, the data parsing module may store the second data into a second reload queue. For example, the second reload queue is used to store one or more pieces of the parsed original data in the data reload process.

The data import module is configured to implement a function of writing data of the data reload module into the database. The data import module may provide a service of writing data into the database. For example, the data import module may be a data import microservice.

For example, after the data import module subscribes to the second reload queue, the data import module may obtain the second data from the second reload queue, and may store the second data into the database. Optionally, time to live of the second data in the database may be set to first duration, where the first duration is less than second duration, the second duration is time to live of data other than third data in the database, and the third data is data that is reloaded to the database via the data reload module. In this way, a storage time of the second data in the database can be effectively reduced, thereby reducing storage costs of the database. Optionally, the data import module may perform reload marking on the second data (or other reload data), or a database server performs reload marking on the second data (or other reload data) written into the database. In this way, it is convenient to distinguish between reload data and other data in the database.

For example, time to live of other data stored into the database is set to 30 days. The database server may set time to live of reload data (for example, the second data or the third data) stored into the database to be less than 30 days, for example, the database server sets the time to live of the reload data stored into the database to 15 days.

Optionally, the first reload queue and the second reload queue may be isolated from the data parsing module, so that a data parsing function of the data import module can be reused. The second reload queue may be isolated from the data import module, so that a data writing function of the data import module can be reused.

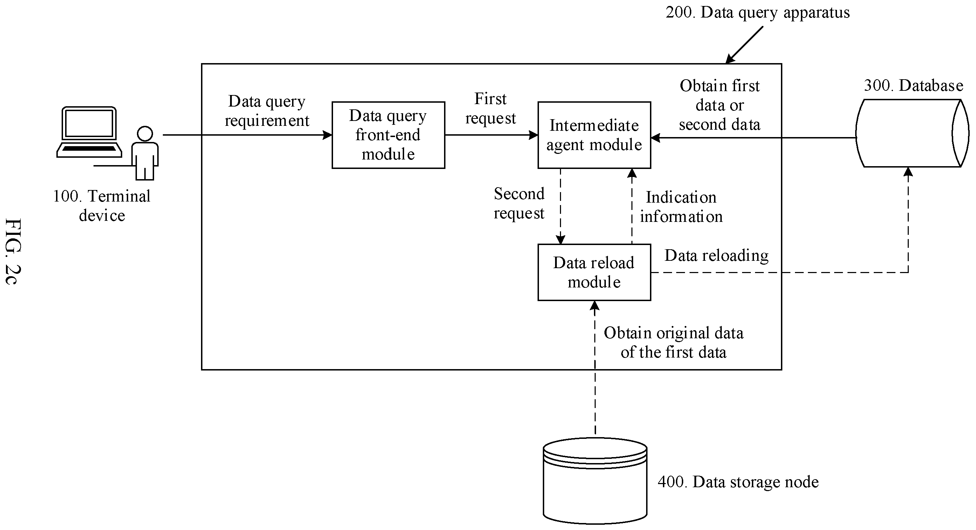

FIG. 2c is a diagram of a structure of another data query apparatus according to an embodiment of this application. A data query front-end module is added in the possible data query apparatus based on FIG. 2a. The data query front-end module is configured to implement a function of providing a data query interface of the data query apparatus. The data query front-end module may provide a data query interface for a user, so that the user efficiently queries required data (for example, CAN signal data), to implement human-computer interaction. The data query interface is used to prompt the user to enter a data query requirement, and the data query requirement may include a data query parameter. For example, the data query parameter may include but is not limited to a vehicle identifier, a vehicle name, whether to reload data, or a query time period (for example, a time period on a date YYYY-MM-DD). For example, the data query front-end module may be a front-end microservice.

For example, after a user logs in, by using a target application (for example, a web browser) on a used terminal device, to a data query interface provided by the data query front-end module, the user may enter and submit a corresponding data query requirement on the data query interface. In response to the data query requirement submitted by the user on the data query interface, the data query front-end module may obtain the data query requirement from the data query interface, and may generate a first request based on the data query requirement. Then, the data query front-end module may send the first request to the intermediate agent module.

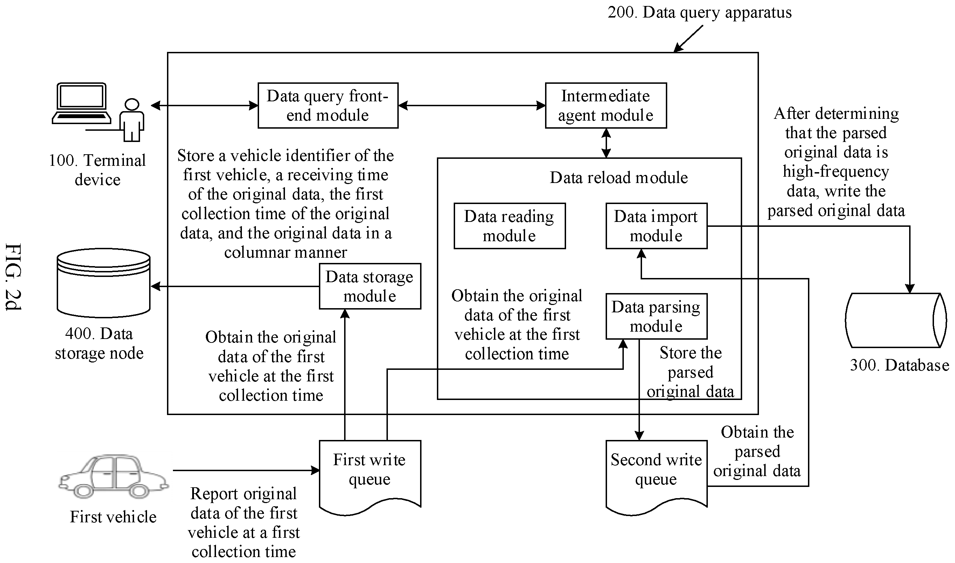

FIG. 2d is a diagram of a structure of still another data query apparatus according to an embodiment of this application. A data storage module is added in the possible data query apparatus based on FIG. 2c. The data storage module is configured to implement a function of writing data of the data query apparatus into a data storage node. The data storage module may provide a service of writing data into the data storage node.

For example, after a vehicle (for example, a first vehicle) collects original data (for example, original CAN signal data, original LIN signal data, or original ETH signal data) in real time or collects original data at a specified time interval, a remote communication terminal (Telematics BOX, T-BOX) may be used to store, into a first write queue, the original data collected in real time or collected at a specified time interval. For example, the first write queue is used to store original data that is reported by any vehicle in a data storage process and that is at one or more collection times. Optionally, the T-BOX is also referred to as a telematics control unit (telematics control unit, TCU), and may integrate functional modules such as a global positioning system (global positioning system, GPS), an external communication interface, an ECU, a microcontroller, a mobile communication unit, and a memory. Internally, the T-BOX may be connected to a vehicular bus (namely, an internal communication network of the terminal device, for example, a CAN bus). Externally, the T-BOX may implement information exchange, on a cloud platform, between a vehicle terminal, a handheld device, or a roadside unit (roadside unit, RSU), and a public network using vehicle to vehicle (vehicle to vehicle, V2V), vehicle to road (vehicle to road, V2R), vehicle to human (vehicle to human, V2H), or vehicle to internet (vehicle to internet, V2I) for communication. Optionally, the first vehicle may include but is not limited to an electronic control unit (electronic control unit, ECU) like a network communication apparatus, a human machine interface (human machine interface, HMI), a cockpit domain controller, or a vehicle sensing system, and an in-vehicle communication network (for example, a CAN bus) configured to implement internal communication of a vehicle. Inside the first vehicle, the network communication apparatus may implement, for example, information transmission with each ECU of the first vehicle through the in-vehicle communication network like a CAN bus. In this embodiment of this application, the network communication apparatus may support a wireless communication manner or a wired communication manner. This is not limited in embodiments of this application.

Optionally, after the first vehicle stores original data of the first vehicle at a collection time (a first collection time) into the first write queue by using a remote communication terminal, two data storage procedures may be triggered. One data storage procedure is executed by the data storage module, and the other data storage procedure is executed by the data parsing module and the data import module in collaboration.

The following describes a storage procedure in which the data storage module stores the original data of the first vehicle at the first collection time into the data storage node.

After the data storage module subscribes to the first write queue, the data storage module may obtain the original data of the first vehicle at the first collection time from the first write queue, and may determine, in the data storage node based on the vehicle identifier (or the vehicle name) of the first vehicle and second time to which the first collection time belongs, a storage path corresponding to the original data of the first vehicle at the first collection time. The second time includes a date to which the first collection time belongs and a full hour to which the first collection time belongs. Optionally, the first collection time may be any time point in the first time period (for example, the time point may be HH:mm/hh:mm, HH:mm:ss/hh:mm:ss, or a timestamp), or may be a time point (for example, a historical time point or a future time point) other than the first time period.

Then, the data storage module may determine, from a storage directory corresponding to the storage path and based on the vehicle identifier (or the vehicle name) of the first vehicle and the first collection time, a file used to store the original data of the first vehicle at the first collection time. Then, the data storage module may store, in a manner of columnar storage, the vehicle identifier (or the vehicle name) of the first vehicle, a receiving time of the original data of the first vehicle at the first collection time (namely, a time at which the original data is sent to the first write queue by using the T-BOX), the first collection time, and the original data of the first vehicle at the first collection time (for example, binary data corresponding to the original data) into the file column by column. This can facilitate subsequent efficient data query and data reloading.

A time period between any full hour in a day and a nearest full hour after the full hour may be divided into a plurality of specified time periods. A vehicle identifier (or a vehicle name) of any vehicle (for example, the first vehicle) may separately form a plurality of different file identifiers (or file names) with the plurality of specified time periods. Optionally, a file corresponding to a first file identifier (or a first file name) in the plurality of different file identifiers (or file names) is used to store original data whose collection time of the first vehicle is in a specified time period corresponding to the first file identifier (or the first file name).

For example, two adjacent full hours in a day are from 19:00 to 20:00, a vehicle identifier of a vehicle is a vehicle identifier A of the first vehicle, and the vehicle identifier A of the first vehicle separately forms different file names with a plurality of specified time periods. A time period from 19:00 to 20:00 may be divided into specified time periods based on a periodicity (for example, 15 minutes are a periodicity, or other duration may be used as a periodicity). In this way, the time period from 19:00 to 20:00 is divided into four time periods, that is, a time period 1 is 19:00-19:15, a time period 2 is 19:15-19:30, a time period 3 is 19:30-19:45, and a time period 4 is 19:45-20:00. In this way, original data of a vehicle whose collection time belongs to a corresponding periodicity can be written into a same file by using 15 minutes as a periodicity. A file name of any file includes a vehicle identifier of the first vehicle and a time period corresponding to the periodicity, or a file name of the file includes a vehicle identifier of the first vehicle and a start moment (or may be referred to as a start time point) corresponding to the periodicity.

For example, the vehicle identifier A of the first vehicle and the time period 1 may form a file name of a file, namely, A-19:00-19:15; or the vehicle identifier A of the first vehicle and the time period 2 may form a file name of a file, namely, A-19:15-19:30; or the vehicle identifier A of the first vehicle and the time period 3 may form a file name of a file, namely, A-19:30-19:45; or the vehicle identifier A of the first vehicle and the time period 4 may form a file name of a file, namely, A-19:45-20:00.

For another example, the vehicle identifier A of the first vehicle and a start moment of the time period 1 may form a file name of a file, namely, A-19:00; or the vehicle identifier A of the first vehicle and a start moment of the time period 2 may form a file name of a file, namely, A-19:15; or the vehicle identifier A of the first vehicle and a start moment of the time period 3 may form a file name of a file, namely, A-19:30; or the vehicle identifier A of the first vehicle and a start moment of the time period 4 may form a file name of a file, namely, A-19:45.

In addition, for a vehicle (for example, the first vehicle), after every 15 minutes, the vehicle switches to a next new file to write original data that is of the first vehicle and whose collection time is in a specified time period corresponding to the new file. In this way, a problem of low data read/write efficiency caused by an excessively large file can be avoided. In addition, a required data file can be quickly located based on a file name (or a file identifier), to facilitate subsequent quick selecting of required raw data based on a vehicle identifier (or a vehicle name) and a query time period. The file name A-19:00-19:15 and the file name A-19:15-19:30 are used as examples. The data storage module may continuously write original data that is of the first vehicle and whose collection time is in 19:00-19:15 into a file corresponding to the file name A-19:00-19:15, and switch to write original data that is of the first vehicle and whose collection time is in 19:15-19:30 into a file corresponding to the file name A-19:15-19:30 after 19:15. It should be noted that, when writing the original data of the first vehicle into the file corresponding to the file name A-19:00-19:15, the data storage module writes, in a columnar storage mode, the vehicle identifier A of the first vehicle, a collection time in 19:00 to 19:15, a receiving time of original data whose collection time is in 19:00 to 19:15, and original data whose collection time is in 19:00-19:15 into the file corresponding to the file name A-19:00-19:15. When writing the original data of the first vehicle into the file corresponding to the file name A-19:15-19:30, the data storage module writes, in a columnar storage mode, the vehicle identifier A of the first vehicle, a collection time in 19:15-19:30, a receiving time of original data whose collection time is in 19:15-19:30, and original data whose collection time is in 19:15-19:30 into the file corresponding to the file name A-19:15-19:30.

The following describes a storage procedure in which the data parsing module and the data import module collaboratively store the original data of the first vehicle at the first collection time into the database.

After the data parsing module subscribes to the first write queue, the data parsing module may obtain the original data of the first vehicle at the first collection time from the first write queue, and may parse the original data of the first vehicle at the first collection time, to obtain the parsed original data (for example, first data) of the first vehicle at the first collection time. For example, the original data reported by the first vehicle is original CAN signal data. When the original CAN signal data is binary data, the data parsing module may parse the original CAN signal data into parsed data of a signal name and a signal value based on a vehicle series and model signal mapping table. Then, the data parsing module may store the first data of the first vehicle at the first collection time into a second write queue. For example, the second write queue is used to store one or more pieces of the parsed original data in a data storage process. Optionally, the first write queue and the second write queue may be isolated from the data parsing module, so that a data parsing function of the data import module can be reused. The second write queue may be isolated from the data import module, so that a data writing function of the data import module can be reused.

After the data import module subscribes to the second write queue, the data import module may obtain the first data of the first vehicle at the first collection time from the second write queue, and may identify the first data of the first vehicle at the first collection time, to determine whether the first data of the first vehicle at the first collection time is high-frequency data. For example, the data import module may identify whether the first data of the first vehicle at the first collection time is the high-frequency data by determining whether a first collection time is in a preset data storage time range and/or whether a data type to which the first data of the first vehicle at the first collection time belongs is in a preset data type table. In this way, in the method, frequently used data that needs to be written into the database can be effectively identified (or distinguished) based on a filter criterion (for example, a preset data storage time range or a preset data type table) configured by the user, so that storage pressure and storage costs of the database can be reduced. For example, the preset data storage time range may be set to a latest month, latest two months, or another time range. The preset data type table includes a data name (for example, a signal name) or a data identifier (for example, a signal identifier) that can be stored into the database. For example, the data import module may also provide a high-frequency parameter configuration interface for the user. The high-frequency parameter configuration interface displays some high-frequency parameter information that needs to be edited by the user, so that the user configures, on the high-frequency parameter configuration interface, a time range (namely, a data storage time range) of data that needs to be written into the database and a type of data that needs to be written into the database (for example, signal names (or signal identifiers) of data can be stored into the database).

When the first collection time is in the preset data storage time range, and/or the data type to which the first data of the first vehicle at the first collection time belongs is in the preset data type table, the data import module may write the first data of the first vehicle at the first collection time into the database. For example, the database server may set long time to live (for example, 30 days) for the first data written into the database.

Optionally, in a data storage process, the user may set some conditions for data stored into the database, that is, the data stored into the database is associated with a configuration of the user. For example, the configuration of the user may include at least one of the following: a preset data storage time range (that is, a time period in which data can be stored into the database, for example, data of a latest month can be stored into the database), a preset data type table (for example, signal names (or signal identifiers) of data can be stored into the database), time to live of data in the database, whether consecutive same data is compressed for storage, or the like.

Optionally, the intermediate agent module, the data reload module (including one or more of the data reading module, the data parsing module, and the data import module), the data query front-end module, and the data storage module may all be implemented by using software, or may all be implemented by using hardware. For example, the following uses the data reload module as an example to describe an implementation of the data load module. Similarly, for implementations of the intermediate agent module, the data query front-end module, and the data storage module, refer to the implementation of the data reload module. Details are not described herein again.

When the data reload module is implemented by using software, the data reload module may be an application program or a code block on a computing device (or a control unit, or the like) that has a data query capability. The computing device may be at least one of computing devices such as a physical host, a virtual machine, and a container. Further, there may be one or more computing devices. For example, the data reload module may be an application program running on a plurality of hosts/virtual machines/containers.

When the data reload module is implemented by using hardware, the data reload module may include at least one computing device, for example, a server. Alternatively, the data reload module may be a device implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof.

In addition, it should be noted that, in embodiments of this application, module division is an example, and is merely a logical function division. In actual implementation, another division manner may be used. Functional modules in embodiments of this application may be integrated into one module, or each of the modules may exist alone physically, or two or more modules are integrated into one module. For example, the data reading module, the data parsing module, and the data import module may be integrated into one module, or the data reading module, the data parsing module, and the data import module are a same module. The integrated unit may be implemented in a form of hardware, or may be implemented in a form of a software functional unit.

After the data query apparatus is described, the following describes in detail a specific implementation of the data query method in embodiments of this application.

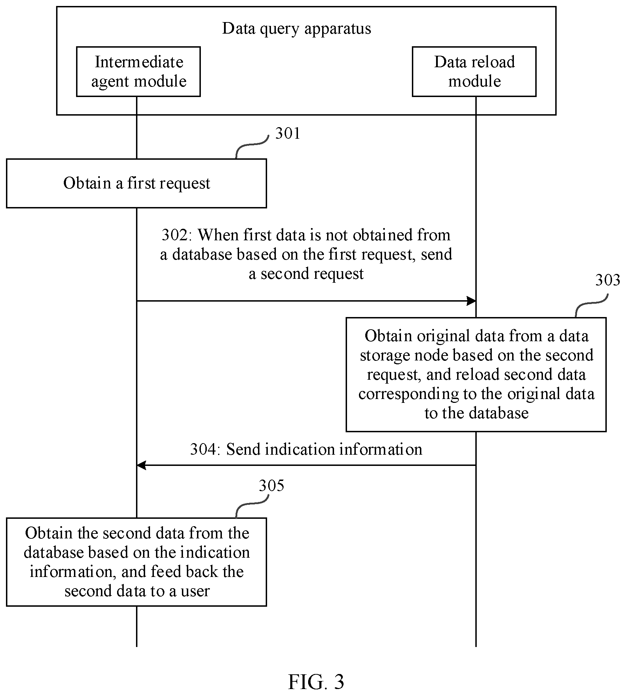

FIG. 3 is a schematic flowchart of a data query method according to an embodiment of this application. The method is applicable to the application scenario shown in FIG. 1. Optionally, the method may be performed by a data query apparatus or a component (for example, a chip, a chip system, or a circuit) that can support the data query apparatus in implementing a function required in the method. For example, the data query apparatus may be the data query apparatus 200 shown in FIG. 1, or may be a functional element (for example, a plug-in, a component, or a chip) that has a data query function and that is disposed in the data query apparatus. The functional element has a function of implementing the data query method. To facilitate description of the technical solutions provided in embodiments of this application, the following uses an example in which a data query apparatus performs a data query method for description. Optionally, the data query apparatus may include an intermediate agent module and a data reload module. As shown in FIG. 3, the method includes the following steps.

Step 301: The intermediate agent module in the data query apparatus obtains a first request.

The first request is used to request to obtain first data of a first vehicle in a first time period.

For example, the first vehicle is a vehicle A, the first time period is a time period A that belongs to YYYY-MM-DD, and the first data is CAN signal data. In a possible implementation, when the data query apparatus includes a data query front-end module, the data query front-end module may provide a data query interface for a user. If a user (for example, automotive enterprise personnel) needs to query CAN signal data of a vehicle A in a time period A on YYYY-MM-DD, the automotive enterprise personnel may log in, by using a target application (for example, a web browser) installed on a used terminal device, to a data query interface provided by the data query front-end module, and may edit a data query requirement (for example, a vehicle identifier (or a vehicle name), whether to reload data, or a query time period) of the vehicle A on the data query interface. Then, the automotive enterprise personnel may submit the query requirement that is of the vehicle A and that is edited on the data query interface. In response to the submission operation performed by the automotive enterprise personnel on the target application for the data query requirement of the vehicle A, the data query front-end module may obtain the data query requirement of the vehicle A. Then, the data query front-end module may generate the first request based on the data query requirement of the vehicle A, and may send the first request to the intermediate agent module. For example, the first request may include but is not limited to a vehicle identifier (or a vehicle name) of the vehicle A, a query time period, and the like.

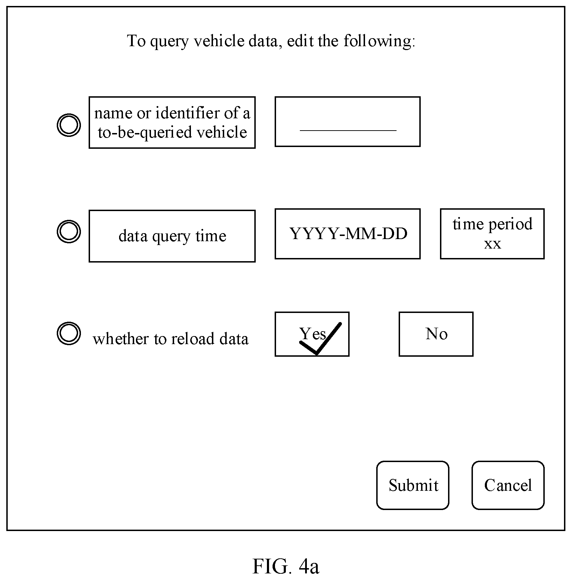

In an example, for a diagram of the data query interface displayed on the target application, refer to FIG. 4a. Some related data query information that is of a to-be-queried vehicle and that needs to be edited by the user is displayed on the data query interface shown in FIG. 4a. For example, the user may enter, on the data query interface, an identifier of the vehicle A, a data query time of the vehicle A (a time period xx on YYYY-MM-DD), and the like. Optionally, the user may also select, on the data query interface, whether to reload data. In this example, the user may directly enter (or directly select) the time period xx after selecting a query date YYYY-MM-DD.

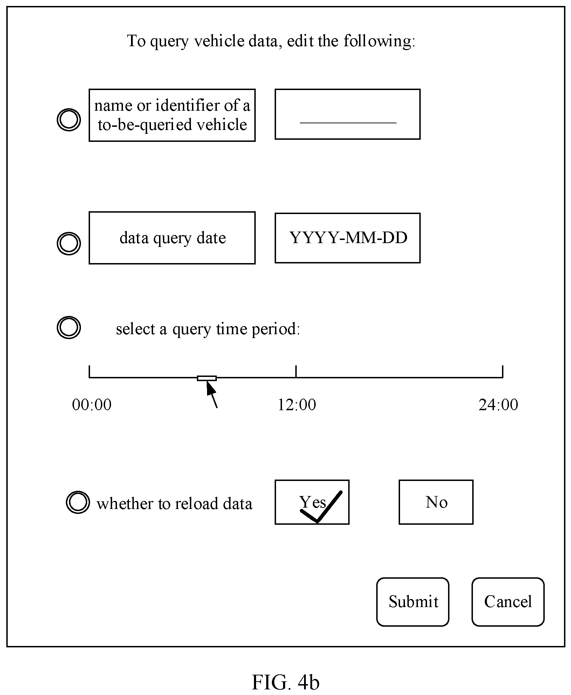

In another example, for a diagram of the data query interface displayed on the target application, refer to FIG. 4b. Some related data query information that is of a to-be-queried vehicle and that needs to be edited by the user is displayed on the data query interface shown in FIG. 4b. For example, the user may enter, on the data query interface, an identifier of the vehicle A, a data query date (YYYY-MM-DD) of the vehicle A, a query time period (time period xx), and the like. Optionally, the user may also select, on the data query interface, whether to reload data. In this example, after selecting a query date YYYY-MM-DD, the user can slide on a time axis (that is, a time axis is from 00:00 to 24:00, similar to a clock table, where the user can select a specific time period on the time axis, for example, from HH:mm/hh:mm to HH:mm/hh:mm) of a day on a data query page to select a time period xx to be queried. For example, when the user slides to select the time period xx on the time axis, the user may first select a time point (for example, HH:mm/hh:mm) by using a mouse, and then drag the mouse backward and click to select another time point. In this way, a time period xx that the user needs to query may be formed.

In another possible implementation, when the data query apparatus does not include the data query front-end module, if a user (for example, automotive enterprise personnel) needs to query CAN signal data of a vehicle A in a time period A on YYYY-MM-DD, the automotive enterprise personnel may use a terminal device to generate the first request based on a vehicle identifier (or a vehicle name) of the vehicle A and the time period A on YYYY-MM-DD, and may send the first request to the intermediate agent module through the used terminal device. Optionally, the intermediate agent module may provide a data query interface for the automotive enterprise personnel, or may not provide a data query interface for the automotive enterprise personnel.

Step 302: When the intermediate agent module does not obtain the first data from the database based on the first request, the intermediate agent module sends a second request to the data reload module in the data query apparatus. The data reload module receives the second request.

In a possible implementation, when the intermediate agent module finds the first data of the first vehicle in the first time period in the database based on the vehicle identifier of the first vehicle and the first time period that are included in the first request, if the data query apparatus includes the data query front-end module, the intermediate agent module may send the first data to the data query front-end module, and the data query front-end module feeds back the first data to the user. If the data query apparatus does not include the data query front-end module, the intermediate agent module may feed back the first data to the user.

In another possible implementation, when the intermediate agent module does not find the first data of the first vehicle in the first time period in the database based on the vehicle identifier of the first vehicle and the first time period that are included in the first request, the intermediate agent module may generate the second request based on the vehicle identifier of the first vehicle and the first time period, and may send the second request to the data reload module. The second request is used to request to reload original data of the first data. For example, the second request may include but is not limited to the vehicle identifier of the first vehicle, the first time period, and the like.

Step 303: The data reload module obtains the original data from a data storage node based on the second request, and reloads second data corresponding to the original data to the database.

Optionally, for an implementation in which the data reload module obtains the original data from the data storage node in step 303, refer to the description of the function of the data reload module shown in FIG. 2a. Details are not described herein again.

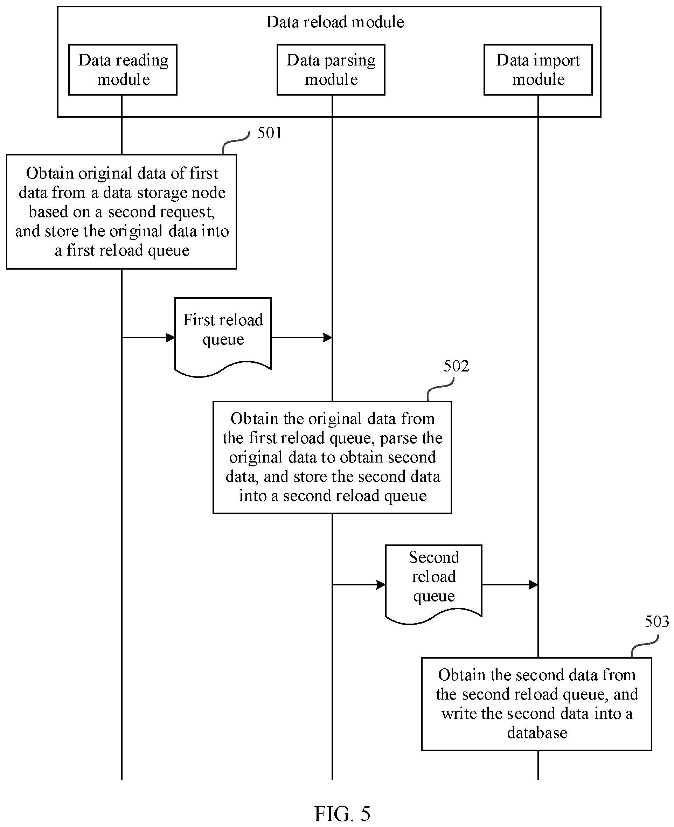

With reference to FIG. 5, the following describes a specific implementation process in which the data reload module reloads the second data corresponding to the original data. Optionally, the data reload module may include a data reading module, a data parsing module, and a data import module. As shown in FIG. 5, the method includes the following steps.

Step 501: The data reading module obtains original data of first data from a data storage node based on a second request, and stores the original data into a first reload queue.

Optionally, for a specific implementation in which the data reading module performs step 501, refer to the description of the function of the data reading module shown in FIG. 2b. Details are not described herein again.

Step 502: The data parsing module obtains the original data from the first reload queue, parses the original data to obtain second data, and stores the second data into a second reload queue.

Optionally, for a specific implementation in which the data parsing module performs step 502, refer to the description of the function of the data parsing module shown in FIG. 2b. Details are not described herein again.

Step 503: The data import module obtains the second data from the second reload queue, and writes the second data into a database.

Optionally, for a specific implementation in which the data import module performs step 503, refer to the description of the function of the data import module shown in FIG. 2b. Details are not described herein again.

It can be learned from step 501 to step 503 that, through collaborative work of the data reading module, the data parsing module, and the data import module, and by using the first reload queue and the second reload queue, a data reload channel may be established, and the data storage node and the database are connected. In this way, the original data can be automatically written from the data storage node into the database.

Step 304: The data reload module sends indication information to the intermediate agent module. The intermediate agent module receives the indication information.

In a possible implementation, after determining that the second data is reloaded to the database, the data reload module may send the indication information to the intermediate agent module. The indication information indicates that data reloading is completed. For example, the indication information may be carried in a notification message or another message.

In another possible implementation, the data reload module does not need to send the indication information to the intermediate agent module, and the intermediate agent module polls the database in real time or polls the database at a specified time interval, to query data (for example, the second data) of the first vehicle in the first time period.

Step 305: The intermediate agent module obtains the second data from the database based on the indication information, and feeds back the second data to the user.

In a possible implementation, when obtaining the indication information from the data reload module, the intermediate agent module may query the data (for example, the second data) of the first vehicle in the first time period in the database based on the indication information. When the second data is found, the intermediate agent module may obtain the second data from the database, and may feed back the second data to the user.

In an example, when the data query apparatus includes a data query front-end module, the intermediate agent module may send the second data to the data query front-end module, the data query front-end module sends the second data to a terminal device used by the user, and the terminal device displays the second data to the user. For example, the intermediate agent module is a data adapt center microservice, and the front-end data query module is a front-end microservice. The data adapt center microservice may encapsulate queried data into a JSON object in a specific format, and send the JSON object to the front-end microservice by using the hypertext transfer protocol (HTTP, HyperText Transfer Protocol). The front-end microservice parses the JSON object, extracts data from the object, processes and converts the data based on specific rules, generates a data structure suitable for front-end display, and pushes the data structure to a front-end page through the WebSocket protocol. The front-end page dynamically updates charts and lists based on the pushed data.

In another example, when the data query apparatus does not include the data query front-end module, the intermediate agent module may send the second data to the terminal device used by the user, and the terminal device displays the second data to the user.

In another possible implementation, the intermediate agent module may poll the database in real time or poll the database at a specified time interval. When it is found that the data (for example, the second data) of the first vehicle in the first time period exists in the database, the intermediate agent module may obtain the second data from the database, and may feed back the second data to the user.

It can be learned from step 301 to step 305 that, by using a data reload function of the data reload module, the data storage node and the database may be connected, so that data is automatically reloaded (or automatically written) from the data storage node to the database. In this way, the data query apparatus can help the user (for example, automotive enterprise personnel) quickly and accurately query required data. Certainly, the user may also query all historical complete data of the vehicle, enabling efficient and comprehensive data queries.

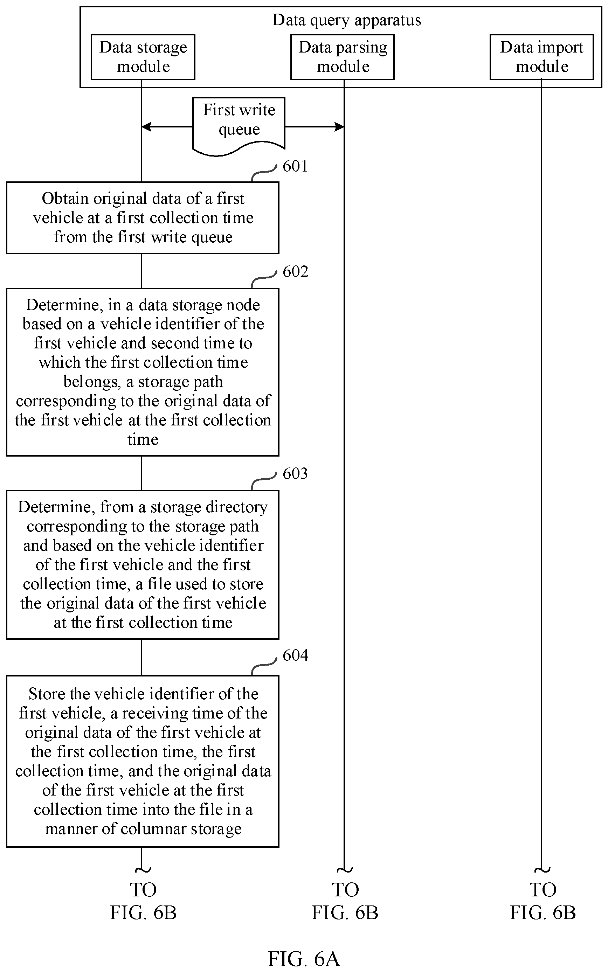

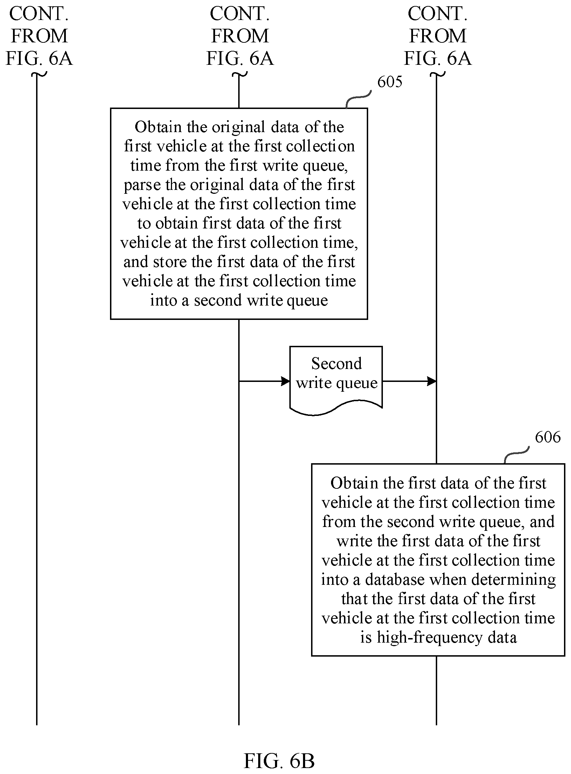

After a specific implementation process in which the data query apparatus queries related data of the vehicle is described, the following describes, with reference to FIG. 6A and FIG. 6B by using a vehicle identifier as an example, a specific implementation process in which the data query apparatus stores data (for example, original CAN signal data) collected by the vehicle. Optionally, in addition to the intermediate agent module and the data reload module, the data query apparatus may further include a data storage module. As shown in FIG. 6A and FIG. 6B, the method includes the following steps.

Step 601: The data storage module obtains original data of a first vehicle at a first collection time from a first write queue.

Step 602: The data storage module determines, in a data storage node based on a vehicle identifier of the first vehicle and second time to which the first collection time belongs, a storage path corresponding to the original data of the first vehicle at the first collection time.

Step 603: The data storage module determines, from a storage directory corresponding to the storage path and based on the vehicle identifier of the first vehicle and the first collection time, a file used to store the original data of the first vehicle at the first collection time.

Step 604: The data storage module stores the vehicle identifier of the first vehicle, a receiving time of the original data of the first vehicle at the first collection time, the first collection time, and the original data of the first vehicle at the first collection time into the file in a manner of columnar storage.

Optionally, for a specific implementation in which the data storage module performs step 601 to step 604, refer to the description of the function of the data storage module shown in FIG. 2d. Details are not described herein again.

Step 605: The data parsing module obtains the original data of the first vehicle at the first collection time from the first write queue, parses the original data of the first vehicle at the first collection time to obtain first data of the first vehicle at the first collection time, and stores the first data of the first vehicle at the first collection time into a second write queue.

Optionally, for a specific implementation in which the data parsing module performs step 605, refer to the description of the function of the data parsing module shown in FIG. 2d. Details are not described herein again.

Step 606: A data import module obtains the first data of the first vehicle at the first collection time from the second write queue, and writes the first data of the first vehicle at the first collection time into a database when determining that the first data of the first vehicle at the first collection time is high-frequency data.

Optionally, for a specific implementation in which the data import module performs step 606, refer to the description of the function of the data import module shown in FIG. 2d. Details are not described herein again.

It can be learned from step 601 to step 606 that the data storage module stores, in a manner of columnar storage, data (for example, original CAN signal data) collected by the vehicle, so that subsequent data reloading and data query can be efficiently performed. In addition, the data storage module keeps writing data collected by the vehicle into a file in a periodicity (or a specified time period, for example, 15 minutes), and after the periodicity (or the specified time period) expires, the data storage module switches to a next new file to write data subsequently collected by the vehicle. In this way, efficiency of reading and writing file data can be improved, and a required data file can be quickly located based on a file name (or a file identifier). In addition, by using (or reusing) a data parsing function of the data parsing module and using (or reusing) a data writing function of the data import module, the data collected by the vehicle can be effectively written into the database in a timely manner. In this way, the user can quickly query corresponding data (for example, CAN signal data) based on the vehicle identifier and the query time period. In addition, the data import module writes the data into the database only when determining that the data is high-frequency data. This can reduce storage pressure and storage costs of the database.

It should be noted that in descriptions of this application, "at least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, or C, includes A and B, A and C, or B and C, or includes A, B, and C. In addition, unless otherwise specified, ordinal numbers such as "first", "second", and "third" in embodiments of this application are used to distinguish between a plurality of objects, and are not used to limit a sequence, a time sequence, priorities, or importance of the plurality of objects. In addition, the terms "include", "comprise", "have", and their variants in this application all mean "include but not limited to", unless otherwise specially emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which steps are performed by corresponding devices.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall all fall within the protection scope of this application.

It may be understood that, to implement functions in the foregoing embodiments, devices in the foregoing embodiments include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

It should be noted that the "step" in embodiments of this application is merely an example, and is a representation method used for better understanding of embodiments, and does not constitute a substantive limitation on performing of the solutions in this application. For example, the "step" may alternatively be understood as a "feature". In addition, the step does not constitute any limitation on an execution sequence of the solutions in this application, and a new technical solution formed through an operation, such as step sequence change, step combination, or step splitting, performed on this basis without affecting implementation of the overall solutions also falls within the scope disclosed in this application.

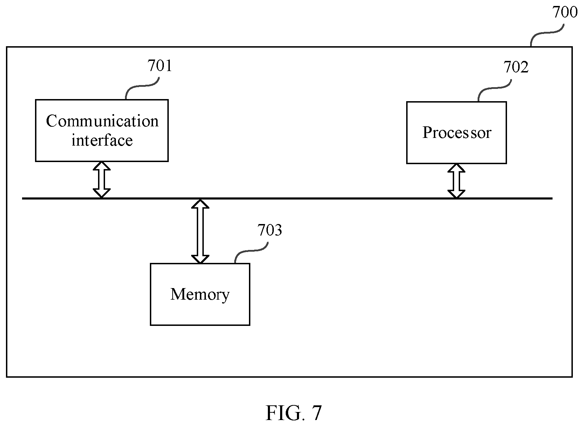

In a simple embodiment, a person skilled in the art may figure out that the data query apparatus in the foregoing embodiment may be in a form shown in FIG. 7.

The data query apparatus 700 shown in FIG. 7 includes at least one processor 702 and a communication interface 701. In an optional design, the data query apparatus 700 may further include a memory 703.

In this embodiment of this application, a specific connection medium between the processor 702 and the memory 703 is not limited.

In the data query apparatus shown in FIG. 7, when communicating with another device, the processor 702 may perform data transmission through the communication interface 701.

When a communication apparatus is in the form shown in FIG. 7, the processor 702 in FIG. 7 may invoke computer-executable instructions stored into the memory 703, to enable the data query apparatus 700 to perform any one of the foregoing method embodiments.

An embodiment of this application further relates to a chip system. The chip system includes a processor. The processor is configured to invoke a computer program or computer instructions stored into a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored into a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC or another programmable logic device, a discrete gate or a transistor logic device, or a discrete hardware component, or may be a system-on-a-chip (system-on-a-chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that embodiments of this application may be provided as a method, a system, or a computer program product.

Based on a same concept, an embodiment of this application further provides a vehicle data query system. The vehicle data query system may include a database, a data storage node, and a data query apparatus. The data query apparatus is configured to implement the technical solutions related to the data query apparatus in the foregoing embodiments. The database is configured to store parsed data of one or more vehicles. The data storage node is configured to back up and store original data of the one or more vehicles.

Based on a same concept, an embodiment of this application further provides a computer program product. The computer program product includes a computer program or instructions. When the computer program or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored into a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

Steps of the methods described in embodiments of this application may be directly embedded into hardware, a software unit executed by a processor, or a combination thereof. The software unit may be stored into a RAM, a ROM, an EEPROM, a register, a hard disk drive, a removable magnetic disk, a CD-ROM, or a storage medium of any other form in the art. For example, the storage medium may be connected to the processor, so that the processor may read information from the storage medium and write information into the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. Thus, this application is intended to cover such modifications and variations to this application, provided that the modifications and variations fall within the scope of the claims of this application and their equivalent technologies.

## Claims

1. A data query apparatus, wherein the apparatus is configured to provide a data query service for a user, and the apparatus comprises:
an intermediate agent module, configured to: obtain a first request, wherein the first request is used to request to obtain first data of a first vehicle in a first time period; and when the first data is not obtained from a database, send a second request to a data reload module, wherein the second request is used to request to reload original data of the first data; and
the data reload module, configured to: obtain the original data from a data storage node based on the second request, reload second data corresponding to the original data back to the database, and send indication information to the intermediate agent module, wherein the indication information indicates that data reloading is completed; and
the intermediate agent module is further configured to: obtain the second data from the database based on the indication information, and feed back the second data to the user.

2. The apparatus according to claim 1, wherein the second request comprises a vehicle identifier of the first vehicle and the first time period; and
when obtaining the original data from the data storage node based on the second request, the data reload module is specifically configured to:
determine, based on the vehicle identifier of the first vehicle and the first time period, a storage path corresponding to the original data; and
obtain the original data from the data storage node based on the storage path.

3. The apparatus according to claim 2, wherein when determining, based on the vehicle identifier of the first vehicle and the first time period, the storage path corresponding to the original data, the data reload module is specifically configured to:
determine a first time to which the first time period belongs, wherein the first time comprises a date to which the first time period belongs and a full hour to which the first time period belongs; and
generate the storage path based on the vehicle identifier of the first vehicle and the first time.

4. The apparatus according to any one of claims 1 to 3, wherein the data reload module comprises a data reading module, a data parsing module, and a data import module;
the data reading module is configured to: obtain the original data from the data storage node, and store the original data into a first reload queue;
the data parsing module is configured to: obtain the original data from the first reload queue, parse the original data to obtain the second data, and store the second data into a second reload queue; and
the data import module is configured to: obtain the second data from the second reload queue, and store the second data into the database.

5. The apparatus according to claim 4, wherein
the data parsing module is further configured to: when a first write queue stores original data of the first vehicle at a first collection time, obtain the original data of the first vehicle at the first collection time from the first write queue, parse the original data of the first vehicle at the first collection time to obtain first data of the first vehicle at the first collection time, and store the first data of the first vehicle at the first collection time into a second write queue, wherein the first collection time is comprised in the first time period; and
the data import module is further configured to: obtain the first data of the first vehicle at the first collection time from the second write queue, and if the first collection time is in a preset data storage time range, store the first data of the first vehicle at the first collection time into the database; and/or if a data type to which the first data of the first vehicle at the first collection time belongs is in a preset data type table, store the first data of the first vehicle at the first collection time into the database.

6. The apparatus according to claim 5, wherein the apparatus further comprises a data storage module; and
the data storage module is configured to: obtain the original data of the first vehicle at the first collection time from the first write queue, and determine, in the data storage node based on the vehicle identifier of the first vehicle and a second time to which the first collection time belongs, a storage path corresponding to the original data of the first vehicle at the first collection time, wherein the second time comprises a date to which the first collection time belongs and a full hour to which the first collection time belongs; determine, in a storage directory corresponding to the storage path and based on the vehicle identifier of the first vehicle and the first collection time, a file used to store the original data of the first vehicle at the first collection time; and store the vehicle identifier of the first vehicle, a receiving time of the original data of the first vehicle at the first collection time, the first collection time, and the original data of the first vehicle at the first collection time into the file in a manner of columnar storage.

7. The apparatus according to any one of claims 1 to 6, wherein the apparatus further comprises a data query front-end module; and
the data query front-end module is configured to: provide a data query interface, obtain a data query requirement from the data query interface, generate the first request based on the data query requirement, and send the first request to the intermediate agent module, wherein the data query interface is used to prompt the user to enter the data query requirement, the data query requirement comprises a data query parameter, and the data query parameter comprises one or more of a vehicle identifier, whether to reload data, or a query time period.

8. The apparatus according to any one of claims 1 to 7, wherein a time period between any full hour in a day and a nearest full hour after the full hour is divided into a plurality of specified time periods, and the vehicle identifier of the first vehicle separately forms a plurality of different file identifiers with the plurality of specified time periods; and a file corresponding to a first file identifier in the plurality of different file identifiers is used to store original data that is of the first vehicle and whose collection time is in a specified time period corresponding to the first file identifier.

9. The apparatus according to any one of claims 1 to 8, wherein time to live of the second data in the database is first duration, the first duration is less than second duration, the second duration is time to live of data other than third data in the database, and the third data is data obtained through the data reload module.

10. The apparatus according to any one of claims 1 to 9, wherein data comprised in the database is associated with a configuration of the user, and the configuration of the user comprises at least one of the following: the preset data storage time range, the preset data type table, time to live of the data in the database, or whether consecutive same data is compressed for storage.

11. A data query method, applied to a data query apparatus, wherein the data query apparatus comprises an intermediate agent module and a data reload module, and the method comprises:
obtaining, by the intermediate agent module, a first request, wherein the first request is used to request to obtain first data of a first vehicle in a first time period;
when the first data is not obtained from a database, sending, by the intermediate agent module, a second request to the data reload module, wherein the second request is used to request to reload original data of the first data;
obtaining, by the data reload module, the original data from a data storage node based on the second request, and reloading second data corresponding to the original data to the database;
sending, by the data reload module, indication information to the intermediate agent module, wherein the indication information indicates that data reloading is completed; and
obtaining, by the intermediate agent module, the second data from the database based on the indication information, and feeding back the second data to the user.

12. The method according to claim 11, wherein the second request comprises a vehicle identifier of the first vehicle and the first time period; and
the obtaining, by the data reload module, the original data from the data storage node based on the second request comprises:
determining, by the data reload module based on the vehicle identifier of the first vehicle and the first time period, a storage path corresponding to the original data; and
obtaining, by the data reload module, the original data from the data storage node based on the storage path.

13. The method according to claim 12, wherein the determining, by the data reload module based on the vehicle identifier of the first vehicle and the first time period, the storage path corresponding to the original data comprises:
determining, by the data reload module, a first time to which the first time period belongs, wherein the first time comprises a date to which the first time period belongs and a full hour to which the first time period belongs; and
generating, by the data reload module, the storage path based on the vehicle identifier of the first vehicle and the first time.

14. The method according to any one of claims 11 to 13, wherein the data reload module comprises a data reading module, a data parsing module, and a data import module; and
the method further comprises:
obtaining, by the data reading module, the original data from the data storage node, and storing the original data into a first reload queue;
obtaining, by the data parsing module, the original data from the first reload queue, parsing the original data to obtain the second data, and storing the second data into a second reload queue; and
obtaining, by the data import module, the second data from the second reload queue, and storing the second data into the database.

15. The method according to claim 14, wherein the method further comprises:
when a first write queue stores original data of the first vehicle at a first collection time, obtaining, by the data parsing module, the original data of the first vehicle at the first collection time from the first write queue, parsing the original data of the first vehicle at the first collection time to obtain first data of the first vehicle at the first collection time, and storing the first data of the first vehicle at the first collection time into a second write queue, wherein the first collection time is comprised in the first time period; and
obtaining, by the data import module, the first data of the first vehicle at the first collection time from the second write queue; and
if the first collection time is in a preset data storage time range, storing, by the data import module, the first data of the first vehicle at the first collection time into the database; and/or
if a data type to which the first data of the first vehicle at the first collection time belongs is in a preset data type table, storing, by the data import module, the first data of the first vehicle at the first collection time into the database.

16. The method according to claim 15, wherein the data query apparatus further comprises a data storage module; and
the method further comprises:
obtaining, by the data storage module, the original data of the first vehicle at the first collection time from the first write queue;
determining, by the data storage module in the data storage node based on the vehicle identifier of the first vehicle and a second time to which the first collection time belongs, a storage path corresponding to the original data of the first vehicle at the first collection time, wherein the second time comprises a date to which the first collection time belongs and a full hour to which the first collection time belongs;
determining, by the data storage module in a storage directory corresponding to the storage path and based on the vehicle identifier of the first vehicle and the first collection time, a file used to store the original data of the first vehicle at the first collection time; and
storing, by the data storage module, the vehicle identifier of the first vehicle, a receiving time of the original data of the first vehicle at the first collection time, the first collection time, and the original data of the first vehicle at the first collection time into the file in a manner of columnar storage.

17. The method according to any one of claims 11 to 16, wherein the data query apparatus further comprises a data query front-end module; and
the method further comprises:
providing, by the data query front-end module, a data query interface, wherein the data query interface is used to prompt the user to enter a data query requirement, the data query requirement comprises a data query parameter, and the data query parameter comprises one or more of a vehicle identifier, whether to reload data, or a query time period;
obtaining, by the data query front-end module, a data query requirement from the data query interface, and generating the first request based on the data query requirement; and
sending, by the data query front-end module, the first request to the intermediate agent module.

18. The method according to any one of claims 11 to 17, wherein a time period between any full hour in a day and a nearest full hour after the full hour is divided into a plurality of specified time periods, and the vehicle identifier of the first vehicle separately forms a plurality of different file identifiers with the plurality of specified time periods; and a file corresponding to a first file identifier in the plurality of different file identifiers is used to store original data that is of the first vehicle and whose collection time is in a specified time period corresponding to the first file identifier.

19. The method according to any one of claims 11 to 18, wherein time to live of the second data in the database is first duration, the first duration is less than second duration, the second duration is time to live of data other than third data in the database, and the third data is data obtained through the data reload module.

20. The method according to any one of claims 11 to 19, wherein data comprised in the database is associated with a configuration of the user, and the configuration of the user comprises at least one of the following: the preset data storage time range, the preset data type table, time to live of the data in the database, or whether consecutive same data is compressed for storage.

21. A data query method, applied to an intermediate agent module, wherein the method comprises:
obtaining a first request, wherein the first request is used to request to obtain first data of a first vehicle in a first time period;
when the first data is not obtained from a database, sending a second request to a data reload module, wherein the second request is used to request to reload original data of the first data;
receiving indication information from the data reload module, wherein the indication information indicates that data reloading is completed; and
obtaining the second data from the database based on the indication information, and feeding back the second data to the user.

22. A data query method, applied to a data reload module, wherein the method comprises:
receiving a second request from an intermediate agent module, wherein the second request is used to request to reload original data of first data of a first vehicle in a first time period, and the second request is generated by the intermediate agent module when the intermediate agent module does not obtain the first data from a database;
obtaining the original data from a data storage node based on the second request, and reloading second data corresponding to the original data to the database; and
sending indication information to the intermediate agent module, wherein the indication information indicates that data reloading is completed.

23. A vehicle data query system, comprising a database, a data storage node, and the data query apparatus according to any one of claims 1 to 10, wherein the data query apparatus is configured to perform the method according to any one of claims 11 to 22.

24. A computer-readable storage medium, wherein the computer-readable storage medium stores a computer program or instructions, and when the computer program or the instructions are executed by a computer, the computer is enabled to perform the method according to any one of claims 11 to 22.

25. A computer program product, wherein the computer program product comprises a computer program or instructions, and when the computer program or the instructions are run on a computer, the computer is enabled to perform the method according to any one of claims 11 to 22.

26. A chip, wherein the chip comprises a processor, the processor is coupled to a memory, and is configured to execute a computer program or instructions stored in the memory, and when the computer program or the instructions are executed, the method according to any one of claims 11 to 22 is implemented.
